(19) Europäisches Patentamt
European Patent Office
Office européen des brevets

(11) EP 4 228 119 A1

(12) EUROPEAN PATENT APPLICATION

(43) Date of publication:
16.08.2023 Bulletin 2023/33

(21) Application number: 22177727.9

(22) Date of filing: 08.06.2022

(51) International Patent Classification (IPC):
*H02J 7/00* (2006.01)

(52) Cooperative Patent Classification (CPC):
H02J 7/0071; H02J 7/005; H02J 7/00714;
H02J 7/007182; Y02E 60/10

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 10.02.2022 CN 202210125094

(71) Applicant: CALB Co., Ltd.
Changzhou City, Jiangsu Province (CN)

(72) Inventors:
• REN, Mingxi
Changzhou City, Jiangsu Province (CN)
• YE, Jianbo
Changzhou City, Jiangsu Province (CN)
• MA, Ruijun
Changzhou City, Jiangsu Province (CN)
• WANG, Shiwei
Changzhou City, Jiangsu Province (CN)

(74) Representative: Becker, Eberhard
Becker Kurig & Partner
Patentanwälte mbB
Bavariastraße 7
80336 München (DE)

(54) BATTERY, ELECTRONIC DEVICE AND BATTERY CHARGING METHOD

(57) The disclosure discloses a battery(401), an electronic device and a battery(401) charging method. When it is determined that a charging strategy needs to be updated, the charge cut-off voltage and charging rate of each charging stage in the current charging process may be determined, so that the battery(401) is charged based on the determined charge cut-off voltage and charging rate, thereby adjusting and updating the charging strategy. In this way, with the assistance of cyclic voltammetry test result, non-destructive analysis of the battery(401) may be achieved, the operation is simple, and the subsequent use of the battery(401) will not be affected. Also, the charging strategy may be adjusted and updated in a timely manner, thereby effectively enhancing the safety of use of battery(401).

When a cyclic voltammetry test is performed on the battery to obtain the current test result, and it is determined that the current charging strategy needs to be updated, the charge cut-off voltage for each of the charging stages in the current charging process is determined according to the current test result and the test result obtained from the last update of the charging strategy — S101

The charging rate for each of the charging stages in the current charging process is determined according to the current test result, the test result obtained from the last update of the charging strategy, and the charge cut-off voltage determined for each of the charging stages in the current charging process — S102

The battery is charged based on the updated charging rate and charge cut-off voltage for each of the charging stages — S103

FIG. 1

EP 4 228 119 A1

**Description**

**BACKGROUND**

Technical Field

The disclosure relates to the technical field of batteries, in particular to a battery, an electronic device and a battery charging method.

Description of Related Art

Lithium-ion batteries are characterized in high voltage platform, high storage energy density, and high power tolerance as advantages. However, as the use of lithium-ion batteries and the number of times of charging and discharging increase, the active materials and available lithium in lithium-ion batteries will be lost, resulting in reduced voltage range for charging and discharging, and the capacity will be limited. If batteries are continuously charged based on charging strategy of fresh batteries (that is, batteries with fewer number of times of charging and discharging), there may be the risk of lithium precipitation, and finally the risk of battery will increase.

SUMMARY

Embodiments of the present disclosure provide a battery, an electronic device, and a battery charging method, which are used to adjust the charging strategy of an aging battery, avoid the risk of lithium precipitation, and improve the safety of battery.

In the first aspect, an embodiment of the present disclosure provides a battery charging method. When the battery charging process includes multiple charging stages, the charging method includes:

When a cyclic voltammetry test is performed on the battery to obtain the current test result, and it is determined that the current charging strategy needs to be updated, the charge cut-off voltage for each of the charging stages in the current charging process is determined according to the current test result and the test result obtained from the last update of the charging strategy.

The charging rate for each of the charging stages in the current charging process is determined according to the current test result, the test result obtained from the last update of the charging strategy, and the charge cut-off voltage determined for each of the charging stages in the current charging process.

The battery is charged based on the charging rate and charge cut-off voltage determined for each of the charging stages.

In the second aspect, an embodiment of the present disclosure provides a battery, which is charged by using the above-mentioned charging method provided by the embodiment of the present disclosure.

In the third aspect, an embodiment of the present disclosure provides an electronic device, including: the battery as provided in the embodiment of the present disclosure, and a cyclic voltammetry test device.

The advantageous effects of the present disclosure are as follows.

In a battery, an electronic device, and a battery charging method provided by the embodiments of the present disclosure, when it is determined that the charging strategy needs to be updated, the charge cut-off voltage and charging rate for each of the charging stages in the current charging process may be determined, so that the battery may be charged according to the determined charge cut-off voltage and charging rate, thereby adjusting and updating the charging strategy. In this way, the results of the cyclic voltammetry test may be used to achieve non-destructive analysis of the battery, the operation is simple and will not affect the battery's performance in subsequent use. In the meantime, the charging strategy may also be adjusted and updated in a timely manner, thereby effectively improving the safety of battery in the use process.

BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.

FIG. 1 is a flowchart of a battery charging method according to an embodiment of the present disclosure.
FIG. 2 is a schematic view of two test results according to an embodiment of the present disclosure.

FIG. 3 is another schematic view of two test results according to an embodiment of the present disclosure.

FIG. 4 is a schematic structural view of an electronic device according to an embodiment of the present disclosure.

DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

Specific implementations of a battery, an electronic device, and a battery charging method provided by embodiments of the present disclosure will be described in detail below with reference to the accompanying drawings. It should be noted that the described embodiments are only a part of the embodiments of the present disclosure, but not all of the embodiments. Based on the embodiments of the present disclosure, all other embodiments obtained by those of ordinary skill in the art without creative efforts shall fall within the scope to be protected by the present disclosure.

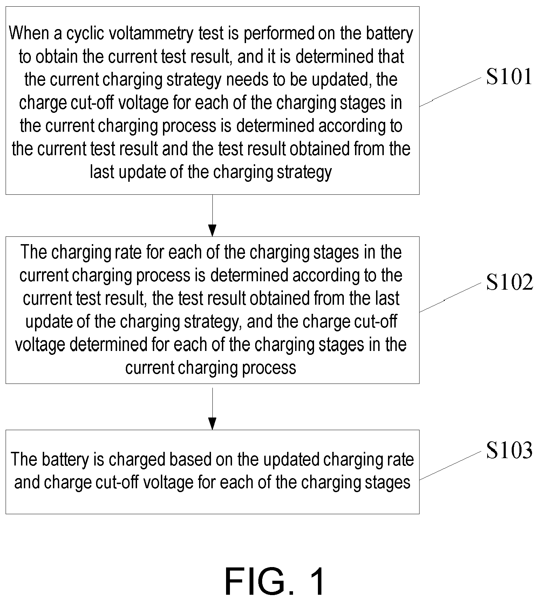

An embodiment of the present disclosure provides a battery charging method. When the battery charging process includes multiple charging stages, as shown in FIG. 1, the charging method includes:

S101. When a cyclic voltammetry test is performed on the battery to obtain a current test result, and it is determined that a current charging strategy needs to be updated, a charge cut-off voltage for each of the charging stages in a current charging process is determined according to the current test result and a test result obtained from a last update of a charging strategy.

It should be noted that every time the charging strategy needs to be updated, a cyclic voltammetry test needs to be performed on the battery, so as to determine the charge cut-off voltage and a charging rate in the current charging process.

Certainly, before charging for the first time, it is also necessary to perform a cyclic voltammetry test on the battery, so as to provide a data reference for the subsequent update of the charging strategy.

Moreover, in the embodiment of the disclosure, when charging the battery, a step-by-step charging method is adopted, so the charging process may include multiple (that is, two or more) charging stages. The specific number of charging process may be set according to actual needs, and the disclosure is not limited thereto.

Moreover, when performing the cyclic voltammetry test, a test condition may be set to be the same every time. The test condition may include: a scan rate of 0.1mV/s is adopted for testing within a preset voltage test range.

Specifically, the voltage test range may be, but is not limited to, 2.75V to 4.35V. Under the circumstances, the initial voltage is 2.75V.

S102. The charging rate for each of the charging stages in the current charging process is determined according to the current test result, the test result obtained from the last update of the charging strategy, and the charge cut-off voltage determined for each of the charging stages in the current charging process.

S103. The battery is charged based on the charging rate and the charge cut-off voltage determined for each of the charging stages.

When it is determined that the charging strategy needs to be updated, the charge cut-off voltage and the charging rate for each of the charging stages in the current charging process may be determined, so that the battery may be charged according to the determined charge cut-off voltage and the charging rate, thereby adjusting and updating the charging strategy. In this way, the results of the cyclic voltammetry test may be used to achieve non-destructive analysis of the battery, the operation is simple and will not affect the battery's performance in subsequent use. In the meantime, the charging strategy may also be adjusted and updated in a timely manner, thereby effectively improving the safety of battery in the use process.

Optionally, in this embodiment of the present disclosure, when it is determined that the current charging strategy does not need to be updated, the method further includes:

If the number of times the battery has been charged currently is zero, the current battery is charged according to a preset charge cut-off voltage and a preset charging rate for each of the charging stages.

If the number of times the battery has been charged currently is greater than zero, the battery is charged by using the most recently determined charging strategy.

In this way, when charging is carried out for the first time, the preset charge cut-off voltage and the preset charging rate may be used for charging, that is, charging is performed according to a preset charging strategy. When charging is performed not for the first time, if the current charging strategy does not need to be updated, charging may be performed by using the recently determined charging strategy. In this way, while realizing safe charging, the computation amount and power consumption of the electronic device may also be reduced.

Based on the above, if the test result obtained from the last update of the charging strategy is the test result obtained before the first charging of the battery, then:

The last updated charging strategy is the preset charging strategy, and the charging strategy before the update is also the preset charging strategy.

Optionally, in this embodiment of the present disclosure, the step of determining that the current charging strategy needs to be updated specifically includes:

It is determined that the current charging strategy needs to be updated according to a preset trigger condition.

The preset trigger condition includes at least one of the following:

The number of times the battery has been charged currently;
The test results of the cyclic voltammetry test;
The preset update period; and
The health status of the battery.

In this way, it may be determined whether the current charging strategy needs to be updated based on at least one of the number of times of charging, the results of the cyclic voltammetry test, the update period, and the health state of the battery, so that consideration may be carried out comprehensively from multiple perspectives and the safety of battery in the use process may be improved.

Specifically, based on the above trigger conditions, when determining whether the current charging strategy needs to be updated, the following methods may be used:

First method:

Optionally, in this embodiment of the present disclosure, when the trigger condition includes: the number of times the battery has been charged currently and the test result of the cyclic voltammetry test, and before each charging, the cyclic voltammetry test is performed on the battery, the step of determining whether the current charging strategy needs to be updated according to the preset trigger condition specifically includes:

It is determined whether the number of times the battery has been charged currently is greater than zero.

If the number of times the battery has been charged currently is greater than zero, the need of updating the current charging strategy is determined according to the area of the cyclic voltammetry curve in the current test result and the area of the cyclic voltammetry curve in the test result obtained from the last update of the charging strategy. The area is: the area of the region enclosed by the cyclic voltammetry curve and the coordinate axis.

If the number of times the battery has been charged currently is not greater than zero, it is determined that there is no need to update the current charging strategy.

It should be noted that, in the first method, no matter what charging strategy is adopted, as long as the battery is charged, the cyclic voltammetry test is performed on the battery before charging.

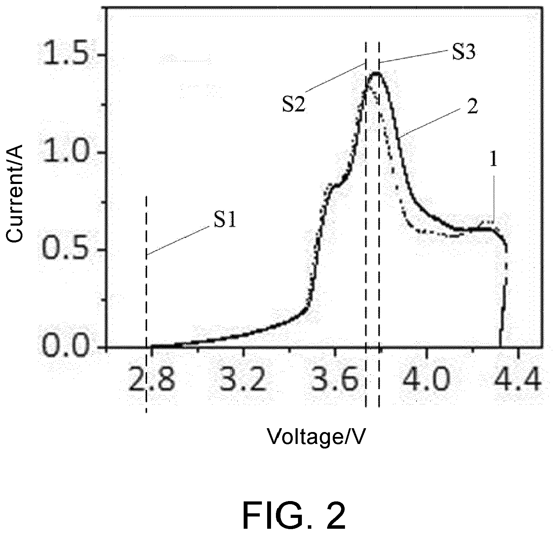

Furthermore, regarding the area mentioned above, with reference to FIG. 2, if curve 1 represents the cyclic voltammetry curve in the current test result, and curve 2 represents the cyclic voltammetry curve in the test result obtained from the last update of the charging strategy, then:

The area of the cyclic voltammetry curve in the current test result is the area of the region enclosed by curve 1 and the abscissa.

The area of the cyclic voltammetry curve in the test result obtained from the last update of the charging strategy is the area of the region enclosed by curve 2 and the abscissa.

Alternatively, according to, in the last charging strategy, a ratio of battery power when the battery is fully charged corresponding to the charging power of each of the stage and an area ratio corresponding to the cyclic voltammetry curve in the current stage obtained from the last update of the charging strategy are the charging power in the current stage, and the voltage value and the current value determined by the corresponding area are referred to as I-CV curve test current value. According to the test current value corresponding to the last I-CV curve and a changing rate of the test current value of the I-CV curve in the current stage, a current value of the adjusted charging strategy is obtained.

According to, in last charging strategy, a ratio of battery power when the battery is fully charged corresponding to the charging power of each of the stage, an area ratio corresponding to the cyclic voltammetry curve obtained from the last update of the charging strategy is obtained. A voltage value corresponding to the area of the cyclic voltammetry curve is a voltage value corresponding to the adjusted charging strategy.

That is to say, when the number of times the battery has been charged currently is not greater than zero, it means that the battery has not been charged, so the charging strategy does not need to be updated, and the charging strategy that has been determined may be used for charging.

When the number of times the battery has been charged currently is greater than zero, it means that the battery has been charged. As the number of times of charging and discharging increases, the active material in the battery might be lost, resulting in a reduction of the voltage range for charging and discharging. Under the circumstances, the judgment may be made further based on the current test result and the cyclic voltammetry curve in the test result obtained from the last update of the charging strategy, thereby realizing precise analysis and updating the charging strategy in a timely manner. Furthermore, it is possible to avoid increase in computation caused by update when there is no need to update the charging strategy. In this manner, the computation and power consumption of the electronic device may be reduced while ensuring the safety of battery in the use process.

Optionally, in the embodiment of the present disclosure, according to the area of the cyclic voltammetry curve in the current test result, and the area of the cyclic voltammetry curve in the test result obtained from the last update of the charging strategy, or, according to, in the last charging strategy, a ratio of battery power when the battery is fully charged corresponding to the charging power of each of the stage and an area ratio corresponding to the cyclic voltammetry curve in the current stage obtained from the last update of the charging strategy are the charging power in the current stage, and the voltage value and the current value determined by the corresponding area are referred to as I-CV curve test current value. According to the test current value corresponding to the last I-CV curve and a changing rate of the test current value of the I-CV curve in the current stage, a current value of the adjusted charging strategy is obtained.

According to, in last charging strategy, a ratio of battery power when the battery is fully charged corresponding to the charging power of each of the stage, an area ratio corresponding to the cyclic voltammetry curve obtained from the last update of the charging strategy is obtained. A voltage value corresponding to the area of the cyclic voltammetry curve is a voltage value corresponding to the adjusted charging strategy.

The step of determining the need of updating the current charging strategy specifically includes:
The area of the cyclic voltammetry curve in the current test result is determined and defined as the first area.

The test result obtained from the last update of the charging strategy is defined as the reference test result, and the area of the cyclic voltammetry curve in the reference test result is determined and defined as the second area.

The area difference between the first area and the second area is calculated.

It is determined whether the absolute value of the area difference is greater than a first preset threshold.

If the absolute value of the area difference is greater than the first preset threshold, it is determined that the current charging strategy needs to be updated.

If the absolute value of the area difference is not greater than the first preset threshold, it is determined that the current charging strategy does not need to be updated.

The first preset threshold may be set according to actual needs, and the disclosure is not limited thereto.

In this way, when the absolute value of the area difference is greater than the first preset threshold, it means that the area of the cyclic voltammetry curve has changed significantly in the two test results, which further means that a certain loss of the active material in the battery may have occurred. Therefore, it is necessary to update the charging strategy under the circumstances to avoid further risks (such as but not limited to lithium precipitation) and improve the safety of the battery.

Second method:

Optionally, in this embodiment of the present disclosure, when the trigger condition includes an update period, the step of determining whether the current charging strategy needs to be updated according to the preset trigger condition specifically includes:

It is determined whether the update period has started over currently.

If the update period has started over currently, it is determined that the current charging strategy needs to updated.

If the update period has not started over currently, it is determined that the current charging strategy does not need to be updated.

The update period may be determined according to the number of times of charging, for example, but not limited to, the update period is determined to start over when the number of times of charging is a multiple of k, and k may be any integer greater than 1.

Certainly, the update period may also be determined according to other factors, and may be specifically set according to actual needs, the disclosure is not limited thereto.

In this way, based on the update period, the charging strategy may be updated regularly, the judgment process may be simplified, the update efficiency may be improved, and in the meantime, the computation and power consumption of the electronic device may be reduced.

Third method:

Optionally, in this embodiment of the present disclosure, when the trigger condition includes the health state of battery, the step of determining whether the current charging strategy needs to be updated according to the preset trigger condition specifically includes:

The state difference between the current health state of the battery and the health state of the battery in the last charging is determined.

It is determined whether the absolute value of the state difference is greater than a second preset threshold.

If the absolute value of the state difference is greater than the second preset threshold, it is determined that the current charging strategy needs to be updated.

If the absolute value of the state difference is not greater than the second preset threshold, it is determined that the current charging strategy does not need to be updated.

The second preset threshold may be set according to actual needs, and the disclosure is not limited thereto.

Since the health status of battery may reflect the aging status of the battery, it may be determined whether the charging strategy needs to be updated based on the aging status, so that the charging strategy may be adjusted from the perspective of the health status of battery and the safety of battery may be improved.

To sum up, three methods are provided above. In the specific implementation, any one of the methods may be selected to determine whether the current charging strategy needs to be updated. Certainly, a combination of multiple (that is, two or more) methods may also be adopted. The specific method may be set according to actual needs, and the disclosure is not limited thereto.

The following examples illustrate the combinations of various methods.

For example: a combination of the first method and the second method is specifically as follows:
It is determined whether the update period has started over currently.

If the update period has started over currently, then it is further determined whether the absolute value of the area difference between the first area and the second area is greater than the first preset threshold; if the absolute value of the area difference is greater than the first preset threshold, it is determined that the current charging strategy needs to be updated; otherwise, it is determined that the current charging strategy does not need to be updated.

If the update period has not started over currently, it is determined that the current charging strategy does not need to be updated.

That is to say, when the update period has started over, further judgment is made based on the two test results to avoid updating of the charging strategy when the update period has started over but the absolute value of the area difference is not relatively large. In this way, the computation and power consumption of the electronic device may be reduced, and the charging strategy may be updated in a timely manner.

For example: a combination of the second method and the third method is specifically as follows:
It is determined whether the update period has started over currently.

If the update period has started over currently, then it is further determined whether the absolute value of the state difference between the current health state of the battery and the health state of the battery in the last charging is greater than the second preset threshold; if the absolute value of the state difference is greater than the second preset threshold, it is determined that the current charging strategy needs to be updated; otherwise, it is determined that the current charging strategy does not need to be updated.

If the update period has not started over currently, it is determined that the current charging strategy does not need to be updated.

That is to say, when the update period has started over, further judgment is made based on the aging status of the battery, so as to avoid updating of the charging strategy when the update period has started over but the aging status is relatively minor. In this way, the computation and power consumption of the electronic device may be reduced, and the charging strategy may be updated in a timely manner.

For example: a combination of the first method, the second method and the third method is specifically as follows:

It is determined whether the update period has started over currently.

If the update period has not started over currently, it is determined that the current charging strategy does not need to be updated.

If the update period has started over currently, it is further determined whether the absolute value of the area difference between the first area and the second area is greater than a first preset threshold.

If the absolute value of the area difference is greater than the first preset threshold, then it is further determined whether the absolute value of the state difference between the current health state of the battery and the health state of the battery in the last charging is greater than the second preset threshold; if the absolute value of the state difference is greater than the second preset threshold, it is determined that the current charging strategy needs to be updated; otherwise, it is determined that the current charging strategy does not need to be updated.

If the absolute value of the area difference is not greater than the first preset threshold, it is determined that the current charging strategy does not need to be updated.

It should be noted that the above description is only to illustrate the combinations of multiple methods through three examples, but in actual situations, the combinations of multiple methods are not limited to the above three examples. The three examples are only exemplary, and specific combination of multiple methods may be set according to actual needs, and the disclosure is not limited thereto.

Optionally, in the embodiment of the present disclosure, the step of determining the charging rate for each of the charging stages in the current charging process according to the current test result, the test result obtained from the last update of the charging strategy, and the charge cut-off voltage determined for each of the charging stages in the current charging process specifically includes:

When the test result obtained from the last update of the charging strategy is defined as the reference test result, and the updated charging strategy obtained from the last update of the charging strategy is defined as the reference charging strategy, for any charging stage in the current charging process, the following process is performed:

The determined charge cut-off voltage in the charging stage is defined as the first charge cut-off voltage.

The second charge cut-off voltage in the charging stage in the reference charging strategy and the second charging rate in the charging stage in the reference charging strategy are determined.

Among the cyclic voltammetry curve in the current test result, the first curve segment between a preset initial voltage and the first charge cut-off voltage in the charging stage is selected. The region that passes through the initial voltage and the first charge cut-off voltage in the charging stage respectively and is enclosed by the straight line parallel to the first coordinate axis for representing the voltage, the first curve segment, and the second coordinate axis perpendicular to the first coordinate axis is defined as the first region.

Among the cyclic voltammetry curve in the reference test result, the second curve segment between the initial voltage and the second charge cut-off voltage in the charging stage is selected. The region that passes through the initial voltage and the second charge cut-off voltage in the charging stage respectively and is enclosed by the straight line parallel to the first coordinate axis, the second curve segment, and the second coordinate axis is defined as the second region.

The first charging rate is determined according to the area of the first region, the area of the second region, the determined first charge cut-off voltage, the second charge cut-off voltage, and the second charging rate, and the first charging rate is used as the determined charging rate in the charging stage.

In this way, the charging rate of each of the charging stages in the current charging process may be determined based on the current test result, the test result obtained from the last update of the charging strategy, and the determined charge cut-off voltage, so that the determined charging rate is more applicable for the state of the current battery, thereby avoiding the risk of lithium precipitation and improving the safety of the battery.

Optionally, in this embodiment of the present disclosure, the step of determining the first charging rate according to the area of the first region, the area of the second region, the determined first charge cut-off voltage, the second charge cut-off voltage, and the second charging rate specifically includes:

The following formula (referred to as formula 1) is adopted to determine the first charging rate in any charging stage.

$$I' = I * S' * \Delta U / (S * \Delta U')$$

In the formula, I' represents the first charging rate in the charging stage, I represents the second charging rate in the charging stage, S' represents the area of the first region, S represents the area of the second region, and $\Delta U'$ represents the difference between the first charge cut-off voltage in the charging stage and the initial voltage, and $\Delta U$ represents the difference between the second charge cut-off voltage in the charging stage and the initial voltage.

For example, if the update of the current charging strategy is indicated as the x-th update, the last update of the charging strategy is the x-1-th update, and the reference charging strategy is the charging strategy obtained after the x-1-th update. Under the circumstances:

ΔU may represent the difference between the charge cut-off voltage at a certain charging stage after the x-1-th update and the initial voltage.

Δ U' may represent the difference between the charge cut-off voltage at a certain charging stage after the x-th update and the initial voltage.

Specifically, the derivation process of the above formula 1 may include:

Combined with FIG. 2, the figure shows the current cyclic voltammetry curve (denoted as curve 1), and the cyclic voltammetry curve obtained from the last update of the charging strategy (denoted as curve 2).

Since the cyclic voltammetry curve is a CV curve, the ordinate is current, and the abscissa is voltage, so the area of the region enclosed by the curve and the abscissa is calculated through integrating, that is:

$$S = \int (U * I) \qquad \text{Formula 1.1}$$

In the formula, S represents the area of the region enclosed by the cyclic voltammetry curve and the abscissa, U represents voltage, and I represents current.

Based on formula 1.1, combined with FIG. 2, a certain charging stage (denoted as charging stage i) is taken as an example. If it is assumed that the determined first charge cut-off voltage corresponding to the charging stage i in the current charging process is: the voltage value corresponding to the intersection of dashed line S2 and the abscissa, and the second charge cut-off voltage corresponding to the charging stage i in the reference charging strategy is: the voltage value corresponding to the intersection of the dashed line S3 and the abscissa; then:

The first curve segment of the curve 1 from the dashed line S1 (that is, the dashed line that passes through the preset initial voltage and is parallel to the ordinate) to the dashed line S2 may be selected, and the region enclosed by the first curve segment, the dashed line S1, the dashed line S2, and the abscissa is defined as the first region. Moreover, the second curve segment of the curve 2 between the dashed line S1 and the dashed line S3 is selected, and the region enclosed by the second curve segment, the dashed line S1, the dashed line S3, and the abscissa is defined as the second region.

Under the circumstances, the ratio of the area of the second region to the area of the first region is as follows:

$$S / S' = \int (\Delta U * I) / \int (\Delta U' * I') \qquad \text{Formula 1.2}$$

In the formula, I' represents the first charging rate of the charging stage, I represents the second charging rate of the charging stage, S' represents the area of the first region, S represents the area of the second region, ΔU' represents the difference between the first charge cut-off voltage of the charging stage and the initial voltage, and ΔU represents the difference between the second charge cut-off voltage of the charging stage and the initial voltage.

To be specific, the initial voltage may be the initial value of the voltage test range during the cyclic voltammetry test. For example, when the voltage test range is 2.75V to 4.35V, the initial voltage is 2.75V.

After the modification of the above formula 1.2, the above formula 1 may be obtained.

Since S', I, and S are all acquired, and when ΔU may be the voltage difference between the second charge cut-off voltage of the charging stage i in the reference charging strategy and the preset initial voltage, and ΔU' may be the voltage difference between the first charge cut-off voltage of the charging stage i in the current charging process and the preset initial voltage, ΔU and ΔU' are all acquired as well, the charging rate (i.e. I') corresponding to the charging stage i may be calculated based on the formula 1.

Optionally, in the embodiment of the present disclosure, the step of determining the charge cut-off voltage for each of the charging stages in the current charging process according to the current test result and the test result obtained from the last update of the charging strategy specifically includes:

When the test result obtained from the last update of the charging strategy is defined as the reference test result, and the updated charging strategy obtained from the last update of the charging strategy is defined as the reference charging strategy, the following procedures are performed for any charging stage in the current charging process except for the last charging stage:

The first voltage corresponding to the N peak currents in the cyclic voltammetry curve of the current test result is determined, and the preset voltage test range is divided into N+1 first voltage intervals according to the N first voltages; N is a positive integer.

The second voltage corresponding to the M peak currents in the cyclic voltammetry curve of the reference test result is determined, and the voltage test range is divided into M+1 second voltage intervals according to the M second voltages; M is a positive integer.

The second charge cut-off voltage of the charging stage in the reference charging strategy is determined.

When the second voltage interval corresponding to the second charge cut-off voltage is defined as the reference interval, and N is equal to M, the first voltage interval corresponding to the reference interval is determined.

According to the determined reference interval and the corresponding first voltage interval, and the second charge cut-off voltage, the first charge cut-off voltage is determined, and the first charge cut-off voltage is used as the updated charge cut-off voltage of the charging stage.

For the last charging stage in the current charging process: the preset charge cut-off voltage is taken as the charge cut-off voltage of this charging stage.

In this way, based on the two test results, the charge cut-off voltage of the charging stage in the current charging process may be determined (that is, the charge cut-off voltage for each of the charging stages in the updated charging strategy is determined), so as to facilitate the subsequent charging of the battery based on the charge cut-off voltage, thereby enhancing the safety of the battery.

Optionally, in this embodiment of the present disclosure, the step of determining the first charge cut-off voltage according to the determined reference interval and the corresponding first voltage interval, and the second charge cut-off voltage specifically includes:

The following formula is adopted to calculate the first charge cut-off voltage at any charging stage:

$$(V_{i+1}-V_i)/(V_{i+1}'-V_i')=(Va-V_i)/(Va'-V_i').$$

In the formula, $V_i$ represents the voltage of one terminal of the reference interval, $V_{i+i}$ represents the voltage of another terminal of the reference interval, $V_{i+i}'$ represents the voltage of one terminal of the first voltage interval corresponding to the reference interval, $V_i'$ represents the voltage of another terminal of the first voltage interval corresponding to the reference interval, Va represents the second charge cut-off voltage of the charging stage, and Va' represents the first charge cut-off voltage of the charging stage.

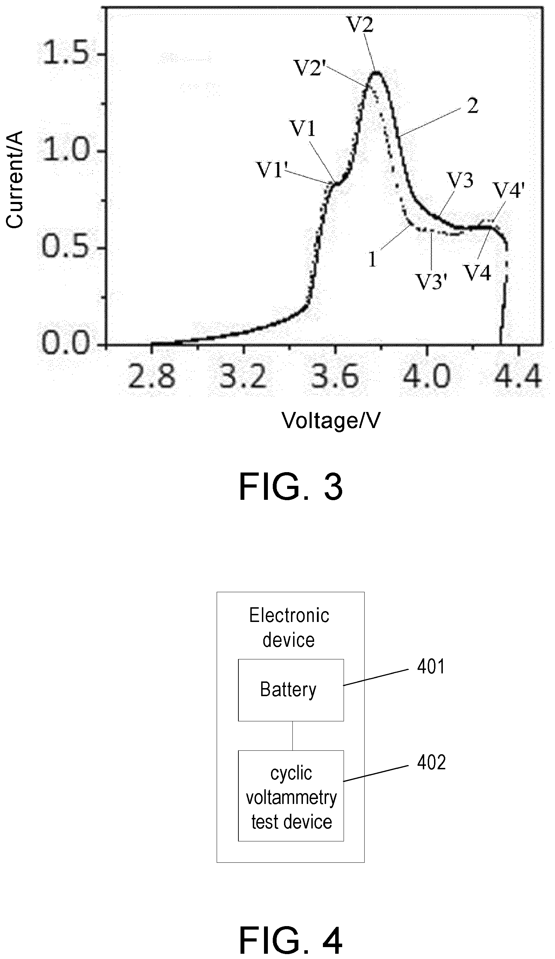

For example, continue to refer to FIG. 3, it can be seen from this figure that with the increase of number of times of battery charging, the highest peak value of curve 1 is shifted toward the direction of the lower voltage compared with the highest peak value of curve 2, and the area of the region enclosed by the curve and the abscissa is significantly reduced.

Based on the above, the following results in Table 1 may be obtained. Voltage 2 in Table 1 represents the charge cut-off voltage in the reference charging strategy, voltage 1 represents the charge cut-off voltage in the updated charging strategy, and charging rate 2 in Table 1 represents the charging rate in the reference charging strategy, and the definition of $\Delta U$, $\Delta U'$, S and S' may be derived from the above.

To be specific about one thing, in Table 1 above, $\Delta U$ is the difference between voltage 2 and 2.75, and $\Delta U'$ is the difference between voltage 1 and 2.75.

Moreover, after performing calculation based on the results shown in FIG. 3 and the above formula 2, the charge cut-off voltage (i.e., voltage 1 in Table 1) for each of the charging stages in the updated charging strategy is obtained.

Table 1

| Serial number of charging stage | Charging rate 2/A | Voltage 2 /V | Voltage 1 /V | $\Delta U$/ V | $\Delta U'$/ V | s | S' |
|---|---|---|---|---|---|---|---|
| (1) | 2.4 | 3.83 | 3.79 | 1.08 | 1.04 | 0.3795 | 0.3328 |
| (2) | 2 | 3.89 | 3.85 | 0.06 | 0.06 | 0.0686 | 0.0646 |
| (3) | 1.7 | 3.95 | 3.89 | 0.06 | 0.04 | 0.0506 | 0.0329 |
| (4) | 1.5 | 4.08 | 4.04 | 0.13 | 0.15 | 0.0885 | 0.0925 |
| (5) | 1.2 | 4.11 | 4.09 | 0.03 | 0.05 | 0.0188 | 0.0293 |
| (6) | 1 | 4.19 | 4.15 | 0.08 | 0.06 | 0.0484 | 0.0344 |

(continued)

| Serial number of charging stage | Charging rate 2/A | Voltage 2 /V | Voltage 1 /V | $\Delta U$/ V | $\Delta U'$/ V | s | S' |
|---|---|---|---|---|---|---|---|
| (7) | 0.66 | 4.24 | 4.26 | 0.08 | 0.11 | 0.0305 | 0.0671 |
| (8) | 0.3 | 4.35 | 4.35 | 0.11 | 0.09 | 0.0643 | 0.0546 |

Next, based on the results in Table 1, after using the above formula 1 for calculation, the charging rate for each of the charging stages in the updated charging strategy may be obtained, as shown in Table 2 below, and the charging rate 1 in Table 2 represents the updated charging rate.

Table 2

| Serial number of charging stage | Charging rate 1/A | Voltage 1/V |
|---|---|---|
| (1) | 2.19 | 3.79 |
| (2) | 1.88 | 3.85 |
| (3) | 1.66 | 3.89 |
| (4) | 1.36 | 4.04 |
| (5) | 1.12 | 4.09 |
| (6) | 0.95 | 4.15 |
| (7) | 0.66 | 4.26 |
| (8) | 0.31 | 4.35 |

The following takes the charging stage with sequence number (6) as an example to describe the process of determining the charge cut-off voltage in the updated charging strategy.

Based on what is shown in FIG. 3, the first voltage corresponding to the four peak currents in curve 1 may be determined, denoted as V1', V2', V3' and V4' respectively, and based on the four first voltages, the voltage test range may be divided into five voltage intervals, namely: a voltage interval from the initial voltage to V1', a voltage interval from V1' to V2', a voltage interval from V2' to V3', a voltage interval from V3' to V4', and a voltage range from V4' to the final voltage.

Similarly, the second voltage corresponding to the four peak currents in curve 2 may be determined, which are denoted as V1, V2, V3 and V4 respectively, and based on the four second voltages, the voltage test range may also be divided into five voltage intervals, namely: a voltage interval from the initial voltage to V1, a voltage interval from V1 to V2, a voltage interval from V2 to V3, a voltage interval from V3 to V4, and a voltage interval from V4 to final voltage.

From the above Table 1, it may be obtained that the second charge cut-off voltage of the charging stage (6) is 4.15V. If it is read from FIG. 3 that V3 is about 4V and V4 is about 4.3V, 4.15V is at the voltage interval from V3 to V4. Under the circumstances, the voltage interval from V3 to V4 may be defined as the reference interval, and meanwhile, the first voltage interval corresponding to the reference interval in curve 1 is found, such as the voltage interval from V3' to V4'.

Under the circumstances, based on the above formula 2, the following may be obtained:

$$(V_4 \text{-} V_3)/(V_4' \text{-} V_3')=(Va \text{-} V_3)/(Va' \text{-} V_3').$$

In the formula, Va may be 4.15V, and V3, V4, V3' and V4' are all known. Therefore, Va' may be calculated to obtain the updated first charge cut-off voltage of the charging stage (6).

The above charging method provided by the embodiment of the present disclosure will be described below with reference to specific embodiments.

Example: Take the trigger conditions including: the number of times the battery has been charged currently and the test result of the cyclic voltammetry test as an example.

1. The first charging:

The charge cut-off voltage for each of the charging stages and the charging rate of each of the charging stages were preset.

A cyclic voltammetry test was performed on the battery, and test result 1 was obtained.

Under the circumstances, the battery may be charged stepwise based on the preset charge cut-off voltage and charging rate.

Specifically, the charging process is denoted as charging strategy 1.

2. The second charging:

Step 2.1. Cyclic voltammetry test was performed on the battery to obtain test result 2.

The test parameters in each cyclic voltammetry test were the same.

Step 2.2, Test result 1 and test result 2 were compared, and it was determined whether the area difference of the curves in the two test results is greater than the first preset threshold; if the determining result is negative, it means that there is no great loss of the active material and active lithium in the battery, then the charging strategy 1 was continuously adopted for charging, and there would be no risk of lithium precipitation in the negative electrode for the time being. Therefore, there was no need to adjust the charging strategy 1 at this time, and the charging strategy 1 may still be used to charge the battery for the second time.

3. The third charging:

Step 3.1, Cyclic voltammetry test was performed on the battery to obtain the test result 3.

The test parameters in each cyclic voltammetry test were the same.

Step 3.2, Test result 1 and test result 3 were compared, and it was determined whether the area difference of the curves in the two test results is greater than the first preset threshold; if the determining result is still negative, it means that there is no great loss of the active material and active lithium in the battery, then the charging strategy 1 was continuously adopted for charging, and there would be no risk of lithium precipitation in the negative electrode for the time being. Therefore, there was no need to adjust the charging strategy 1 at this time, and the charging strategy 1 may still be used to charge the battery for the third time.

4. The fourth charging:

Step 4.1, Cyclic voltammetry test was performed on the battery to obtain the test result 4.

The test parameters in each cyclic voltammetry test were the same.

Step 4.2, Test result 1 and test result 4 were compared, and it was determined whether the area difference of the curves in the two test results is greater than the first preset threshold; if the determining result is positive, it means that there is a great loss of the active material and active lithium in the battery, and if the charging strategy 1 was continuously adopted for charging, there might be risk of lithium precipitation in the negative electrode. Therefore, there was a need to adjust the charging strategy 1 at this time.

Step 4.3: The charging strategy 1 may be adjusted based on the test result 1 and the test result 4, the adjusted charging strategy was denoted as the charging strategy 2, and the charging strategy 2 was adopted to charge the battery for the fourth time.

5. The fifth charging:

Step 5.1, Cyclic voltammetry test was performed on the battery to obtain the test result 5.

The test parameters in each cyclic voltammetry test were the same.

Step 5.2, Test result 4 and test result 5 were compared, and it was determined whether the area difference of the curves in the two test results is greater than the first preset threshold; if the determining result is still negative, it means that there is no great loss of the active material and active lithium in the battery, then the charging strategy 2 was continuously adopted for charging, and there would be no risk of lithium precipitation in the negative electrode for the time being. Therefore, there was no need to adjust the charging strategy 2 at this time, and the charging strategy 2 may still be used to charge the battery for the fifth time.

6. The sixth charging:

Step 6.1, Cyclic voltammetry test was performed on the battery to obtain the test result 6.

The test parameters in each cyclic voltammetry test were the same.

Step 6.2, Test result 4 and test result 6 were compared, and it was determined whether the area difference of the curves in the two test results is greater than the first preset threshold; if the determining result is positive, it means that there is a great loss of the active material and active lithium in the battery, and if the charging strategy 2 was continuously adopted for charging, there might be risk of lithium precipitation in the negative electrode. Therefore, there was a need to adjust the charging strategy 2 at this time.

Step 6.3: The charging strategy 2 may be adjusted based on the test result 4 and the test result 6, the adjusted charging strategy was denoted as the charging strategy 3, and the charging strategy 3 was adopted to charge the battery for the sixth time.

The subsequent charging process may be deduced from the above.

Based on the same inventive concept, an embodiment of the present disclosure provides a battery, which is charged by using the above-mentioned charging method provided by the embodiment of the present disclosure.

Optionally, in the embodiment of the present disclosure, the battery may be a lithium-ion electromagnetic, and certainly, the battery might also be other batteries for which the charging strategy needs to be adjusted, and the disclosure is not limited thereto.

Based on the same inventive concept, an embodiment of the present disclosure provides an electronic device, as shown in FIG. 4, including: the battery 401 and a cyclic voltammetry test device 402 as provided in the embodiment of the present disclosure.

Optionally, in this embodiment of the present disclosure, in addition to the battery and the cyclic voltammetry test device, the electronic device may further include other structures that may be used in the electronic device, and no further details are incorporated herein.

Optionally, in this embodiment of the present disclosure, the electronic device may be, but is not limited to, an electric vehicle.

It should be emphasized that the above-mentioned technical solutions provided by the embodiments of the present disclosure have the following advantageous effects.

1. The charging strategy of aging batteries may be adjusted in real time.
2. With the assistance of cyclic voltammetry test, non-destructive analysis of the battery may be achieved, the operation is simple, and the subsequent use of the battery will not be affected.
3. The disclosure has higher applicability and may be applied to various types of batteries.

It will be apparent to those skilled in the art that various modifications and variations can be made to the present disclosure without departing from the spirit and scope of the disclosure. Thus, provided that these modifications and variations of the present disclosure fall within the scope of the claims of the present disclosure and their equivalents, the present disclosure is also intended to include these modifications and variations.

**Claims**

1. A charging method of a battery(401), when a charging process of the battery(401) comprises a plurality of charging stages, the charging method comprises:

   when a cyclic voltammetry test is performed on the battery(401) to obtain a current test result, and it is determined that a current charging strategy needs to be updated, determining a charge cut-off voltage for each of the plurality of charging stages in a current charging process according to the current test result and a test result obtained from a last update of a charging strategy(S101);
   determining a charging rate for each of the plurality of charging stages in the current charging process according to the current test result, the test result obtained from the last update of the charging strategy, and the charge cut-off voltage determined for each of the plurality of charging stages in the current charging process(S102); and
   charging the battery(401) based on the charging rate and the charge cut-off voltage determined for each of the plurality of charging stages(S103).

2. The charging method of the battery(401) according to claim 1, wherein the step of determining that the current charging strategy needs to be updated specifically comprises:

   determining that the current charging strategy needs to be updated according to a preset trigger condition, wherein the preset trigger condition comprises at least one of the following:

a number of times the battery(401) has been charged currently;
the test result of the cyclic voltammetry test;
a preset update period; and
a health status of the battery(401).

3. The charging method of the battery(401) according to claim 2, wherein when a trigger condition comprises: the number of times the battery(401) has been charged currently and the test result of the cyclic voltammetry test, and before each charging, the cyclic voltammetry test is performed on the battery(401), the step of determining whether the current charging strategy needs to be updated according to the preset trigger condition specifically comprises:

determining whether the number of times the battery(401) has been charged currently is greater than zero;
if the number of times the battery(401) has been charged currently is greater than zero, determining a need of updating the current charging strategy according to an area of a cyclic voltammetry curve in the current test result and an area of the cyclic voltammetry curve in the test result obtained from the last update of the charging strategy, wherein the area is: an area of a region enclosed by the cyclic voltammetry curve and a coordinate axis; and
if the number of times the battery(401) has been charged currently is not greater than zero, determining that there is no need to update the current charging strategy.

4. The charging method of the battery(401) according to claim 3, wherein the step of determining the need of updating the current charging strategy according to the area of the cyclic voltammetry curve in the current test result and the area of the cyclic voltammetry curve in the test result obtained from the last update of the charging strategy specifically comprises:

determining and defining the area of the cyclic voltammetry curve in the current test result as a first area;
defining the test result obtained from the last update of the charging strategy as a reference test result, and determining and defining the area of the cyclic voltammetry curve in the reference test result as a second area;
calculating an area difference between the first area and the second area;
determining whether an absolute value of the area difference is greater than a first preset threshold;
if the absolute value of the area difference is greater than the first preset threshold, determining that the current charging strategy needs to be updated; and
if the absolute value of the area difference is not greater than the first preset threshold, determining that the current charging strategy does not need to be updated.

5. The charging method of the battery(401) according to claim 2, wherein when a trigger condition comprises an update period, the step of determining whether the current charging strategy needs to be updated according to the preset trigger condition specifically comprises:

determining whether the update period has started over currently;
if the update period has started over currently, determining that the current charging strategy needs to updated; and
if the update period has not started over currently, determining that the current charging strategy does not need to be updated.

6. The charging method of the battery(401) according to claim 2, wherein when a trigger condition comprises the health state of the battery(401), the step of determining whether the current charging strategy needs to be updated according to the preset trigger condition specifically comprises:

determining a state difference between the current health state of the battery(401) and the health state of the battery(401) in a last charging;
determining whether an absolute value of the state difference is greater than a second preset threshold;
if the absolute value of the state difference is greater than the second preset threshold, determining that the current charging strategy needs to be updated; and
if the absolute value of the state difference is not greater than the second preset threshold, determining that the current charging strategy does not need to be updated.

7. The charging method of the battery(401) according to claim 1, wherein the step of determining the charging rate for each of the plurality of charging stages in the current charging process according to the current test result, the test result obtained from the last update of the charging strategy, and the charge cut-off voltage determined for each of the plurality of charging stages in the current charging process specifically comprises:

when the test result obtained from the last update of the charging strategy is defined as a reference test result, and the updated charging strategy obtained from the last update of the charging strategy is defined as a reference charging strategy, for any of the plurality of charging stages in the current charging process, the following process is performed:

defining the determined charge cut-off voltage in a charging stage of any of the plurality of charging stages as a first charge cut-off voltage;

determining a second charge cut-off voltage in the charging stage in the reference charging strategy and a second charging rate in the charging stage in the reference charging strategy;

selecting, among a cyclic voltammetry curve in the current test result, a first curve segment between a preset initial voltage and the first charge cut-off voltage in the charging stage, wherein a region that passes through the initial voltage and the first charge cut-off voltage in the charging stage respectively and is enclosed by a straight line parallel to a first coordinate axis for representing a voltage, the first curve segment, and a second coordinate axis perpendicular to the first coordinate axis is defined as a first region;

selecting, among the cyclic voltammetry curve in the reference test result, a second curve segment between the initial voltage and the second charge cut-off voltage in the charging stage, wherein a region that passes through the initial voltage and the second charge cut-off voltage in the charging stage respectively and is enclosed by the straight line parallel to the first coordinate axis, the second curve segment, and the second coordinate axis is defined as a second region; and

determining a first charging rate according to an area of the first region, an area of the second region, the determined first charge cut-off voltage, the second charge cut-off voltage, and the second charging rate, and taking the first charging rate as the determined charging rate in the charging stage.

8. The charging method of the battery(401) according to claim 7, wherein the step of determining the first charging rate according to the area of the first region, the area of the second region, the determined first charge cut-off voltage, the second charge cut-off voltage, and the second charging rate specifically comprises:

determining the first charging rate in any of the plurality of charging stages by using the following formula:

$$I' = I * S' * \Delta U / (S * \Delta U');$$

wherein I' represents the first charging rate in the charging stage, I represents the second charging rate in the charging stage, S' represents the area of the first region, S represents the area of the second region, and $\Delta U'$ represents a difference between the first charge cut-off voltage in the charging stage and the initial voltage, and $\Delta U$ represents a difference between the second charge cut-off voltage in the charging stage and the initial voltage.

9. The charging method of the battery(401) according to claim 1, wherein the step of determining the charge cut-off voltage for each of the plurality of charging stages in the current charging process according to the current test result and the test result obtained from the last update of the charging strategy specifically comprises:

when the test result obtained from the last update of the charging strategy is defined as a reference test result, and the updated charging strategy obtained from the last update of the charging strategy is defined as a reference charging strategy, the following procedures are performed for any of the plurality of charging stages in the current charging process except for the last charging stage:

determining a first voltage corresponding to N peak currents in a cyclic voltammetry curve of the current test result, and dividing a preset voltage test range into N+1 first voltage intervals according to the N first voltages, wherein N is a positive integer;

determining a second voltage corresponding to M peak currents in the cyclic voltammetry curve of the reference test result, and dividing the voltage test range into M+1 second voltage intervals according to the M second voltages, wherein M is a positive integer;

determining a second charge cut-off voltage of a charging stage of any of the plurality of charging stages in the reference charging strategy;

when the second voltage interval corresponding to the second charge cut-off voltage is defined as a reference interval, and N is equal to M, determining the first voltage interval corresponding to the reference interval;

determining a first charge cut-off voltage according to the determined reference interval and the corresponding first voltage interval, and the second charge cut-off voltage, and taking the first charge cut-off voltage as an updated charge cut-off voltage of the charging stage; and

taking a preset charge cut-off voltage as a charge cut-off voltage of the charging stage for the last charging stage in the current charging process.

10. The charging method of the battery(401) according to claim 9, wherein the step of determining the first charge cut-off voltage according to the determined reference interval and the corresponding first voltage interval, and the second charge cut-off voltage specifically comprises:

calculating the first charge cut-off voltage at any of the plurality of charging stages by using the following formula:

$$(V_{i+1}-V_i)/(V_{i+1}'-V_i')=(Va-V_i)/(Va'-V_i');$$

wherein $V_i$ represents a voltage of one terminal of the reference interval, $Vi+i$ represents a voltage of another terminal of the reference interval, $V_{i+1}'$ represents a voltage of one terminal of the first voltage interval corresponding to the reference interval, $V_i'$ represents a voltage of another terminal of the first voltage interval corresponding to the reference interval, Va represents the second charge cut-off voltage of the charging stage, and Va' represents the first charge cut-off voltage of the charging stage.

11. The charging method of the battery(401) according to claim 1, wherein when it is determined that the current charging strategy does not need to be updated, the method further comprises:

if a number of times the battery(401) has been charged currently is zero, charging the current battery(401) according to a preset charge cut-off voltage and a charging rate for each of the plurality of charging stages; and if the number of times the battery(401) has been charged currently is greater than zero, charging the battery(401) by using a most recently determined charging strategy.

12. The charging method of the battery(401) according to claim 2, wherein when it is determined that the current charging strategy does not need to be updated, the method further comprises:

if the number of times the battery(401) has been charged currently is zero, charging the current battery(401) according to a preset charge cut-off voltage and a charging rate for each of the plurality of charging stages; and if the number of times the battery(401) has been charged currently is greater than zero, charging the battery(401) by using a most recently determined charging strategy.

13. The charging method of the battery(401) according to claim 3, wherein when it is determined that the current charging strategy does not need to be updated, the method further comprises:

if the number of times the battery(401) has been charged currently is zero, charging the current battery(401) according to a preset charge cut-off voltage and a charging rate for each of the plurality of charging stages; and if the number of times the battery(401) has been charged currently is greater than zero, charging the battery(401) by using a most recently determined charging strategy.

14. A battery(401), which is charged by using the charging method as claimed in claim 1.

15. An electronic device, comprising the battery(401) as claimed in claim 18 and a cyclic voltammetry test device(402).

When a cyclic voltammetry test is performed on the battery to obtain the current test result, and it is determined that the current charging strategy needs to be updated, the charge cut-off voltage for each of the charging stages in the current charging process is determined according to the current test result and the test result obtained from the last update of the charging strategy ⟶ S101

The charging rate for each of the charging stages in the current charging process is determined according to the current test result, the test result obtained from the last update of the charging strategy, and the charge cut-off voltage determined for each of the charging stages in the current charging process ⟶ S102

The battery is charged based on the updated charging rate and charge cut-off voltage for each of the charging stages ⟶ S103

## FIG. 1

FIG. 2

FIG. 3

FIG. 4

## EUROPEAN SEARCH REPORT

| | Application Number |
|---|---|
| | EP 22 17 7727 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/167621 A1 (YAZAMI RACHID [SG] ET AL) 3 June 2021 (2021-06-03) | 1,2,5,6, 11,12, 14,15 | INV. H02J7/00 |
| A | * paragraphs [0063] - [0165]; claim 1 * | 3,4, 7-10,13 | |
| | ----- | | |
| X | Thusitha Asela Bandara ET AL: "Adaptive Charging Protocol (ACP) based on Non-linear Voltammetry (NLV) Charging Patterns for Fast charging Li-Ion batteries", International Journal of Engineering Science Invention III ¦¦ Dec, 25 December 2018 (2018-12-25), pages 44-58, XP055567671, Retrieved from the Internet: URL:http://www.ijesi.org/papers/Vol(7)i12/ Version-3/F0712034458.pdf [retrieved on 2019-03-12] | 1,2,5,6, 11,12, 14,15 | |
| A | * the whole document * | 3,4, 7-10,13 | TECHNICAL FIELDS SEARCHED (IPC) |
| | ----- | | H02J |

The present search report has been drawn up for all claims

| Place of search | Date of completion of the search | Examiner |
|---|---|---|
| Munich | 31 May 2023 | Telega, Pawel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 7727

This annex lists the patent family members relating to the patent documents cited in the above-mentioned European search report.
The members are as contained in the European Patent Office EDP file on
The European Patent Office is in no way liable for these particulars which are merely given for the purpose of information.

31-05-2023

| Patent document cited in search report | | Publication date | Patent family member(s) | | Publication date |
|---|---|---|---|---|---|
| US 2021167621 | A1 | 03-06-2021 | CN | 111656644 A | 11-09-2020 |
| | | | EP | 3763013 A1 | 13-01-2021 |
| | | | JP | 2021506221 A | 18-02-2021 |
| | | | US | 2021167621 A1 | 03-06-2021 |
| | | | WO | 2019111226 A1 | 13-06-2019 |

For more details about this annex : see Official Journal of the European Patent Office, No. 12/82

EPO FORM P0459